# EUROPÄISCHE PATENTANMELDUNG

(11) **EP 4 160 788 A1**
(43) Veröffentlichungstag der Anmeldung: **05.04.2023**
(21) Anmeldenummer: 22194092.7
(22) Anmeldetag: 06.09.2022
(51) Int. Cl.: H01M 10/613, H01M 10/625, H01M 10/643, H01M 10/653, H01M 10/6555, H01M 10/6557, H01M 50/213, H01M 50/244

(54) **BATTERIEMODUL EINER TRAKTIONSBATTERIE EINES KRAFTFAHRZEUGS UND VERFAHREN ZUM HERSTELLEN DESSELBEN**

(30) Priorität: 30.09.2021 DE 102021125355
(71) Anmelder: Dr. Ing. h.c. F. Porsche Aktiengesellschaft, 70435 Stuttgart (DE); Rimac Automobiles Ltd., 10431 Sveta Nedelja (HR)
(72) Erfinder: Renz, Fadi, 70806 Kornwestheim (DE); Patiniotis, Stavros, 10000 Zaggreb (HR); Vinkovi , Inge, 10430 Samobor (HR)
(74) Vertreter: Sturm, Christoph

(57) **Zusammenfassung**

Batteriemodul einer Traktionsbatterie eines Kraftfahrzeugs, mit mehreren in übereinander positionierten Batteriezellenebenen angeordneten Batteriezellen, und mit einer Vorrichtung zur Kühlung der Batteriezellen, die folgendes aufweist: Eine zwischen einer ersten Batteriezellenebene und einer zweiten Batteriezellenebene angeordnete erste Kühlplatte (14), die in thermischem Kontakt mit den Batteriezellen der ersten und zweiten Batteriezellenebene steht. Innerhalb der ersten und zweiten Batteriezellenebene angeordnete zweite Kühlplatten (15), die in thermischem Kontakt mit mehreren Batteriezellen (13) der jeweiligen Batteriezellenebene stehen. Die erste Kühlplatte (14) und die zweiten Kühlplatten (15) sind derart ausgebildet, dass ein erster Teil eines in die erste Kühlplatte einströmenden Kühlfluids die erste Kühlplatte durchströmt und aus der ersten Kühlplatte ausströmt, und dass ein zweiter Teil des in die erste Kühlplatte (14) einströmenden Kühlfluids von der ersten Kühlplatte (14) in die zweiten Kühlplatten (15) strömt, die zweiten Kühlplatten durchströmt von den zweiten Kühlplatten (15) in die erste Kühlplatte (14) strömt und aus der der ersten Kühlplatte ausströmt. Eintrittsrohre (21) der zweiten Kühlplatten, über welche der zweite Teil des Kühlfluids von der ersten Kühlplatte in die zweiten Kühlplatten strömt, und Austrittsrohre der zweiten Kühlplatten, über welche der zweite Teil des Kühlfluids von den zweiten Kühlplatten in die erste Kühlplatten strömt, sind mit Anschlussstutzen (22) der ersten Kühlplatte für die Eintrittsrohre (21) und Austrittsrohre (20) über ein wärmeleitendes Vergussmaterial (24) fluiddicht verbunden.

## Beschreibung

Die Erfindung betrifft ein Batteriemodul einer Traktionsbatterie eines Kraftfahrzeugs. Ferner betrifft die Erfindung ein Verfahren zum Herstellen eines solchen Batteriemoduls.

In Kraftfahrzeugen, wie zum Beispiel in Hybridfahrzeugen oder auch Elektrofahrzeugen, sind Traktionsbatterien verbaut, die der Speicherung elektrischer Energie dienen, um dieselbe einer elektrischen Maschine bereitzustellen. Traktionsbatterien verfügen über mehrere Batteriemodule, die untereinander elektrisch verschaltet sind. Jedes Batteriemodul verfügt über mehrere Batteriezellen, die auch untereinander elektrisch verschaltet sind. Im Betrieb unterliegen die Batteriezellen, zum Beispiel infolge von chemischen Reaktionen innerhalb der Batteriezellen, einer Erwärmung. Um eine Beschädigung der Batteriemodule und damit der Traktionsbatterie infolge von einer Überhitzung der Batteriezellen zu vermeiden, muss durch Kühlung der Batteriezellen Wärme von der Traktionsbatterie abgeführt werden. Es ist bereits bekannt, die Batteriezellen einer Traktionsbatterie zu kühlen. Hierzu verfügt ein Batteriemodul einer Traktionsbatterie einer Vorrichtung zur Kühlung der Batteriezellen.

Aus US 10 601 090 B2 und US 2018 / 0 261 813 A1 sind jeweils Batteriemodule bekannt, die mehrere Batteriezellen aufweisen, wobei die Batteriezellen mit Enden in eine wannenartig oder tropfartig ausgebildete Kühlplatte hineinragen. Die Batteriezellen sind an den in die Kühlplatte hineinragenden Enden über ein Vergussmaterial mit der Kühlplatte verbunden.

Aus der DE 10 2007 063 187 B3 ist eine weitere Batterie eines Kraftfahrzeugs bekannt. Die Batterie verfügt über mehrere Batteriezellen, die auf einer Kühlplatte angeordnet sind. Zwischen der Kühlplatte und Unterseiten der Zellen ist eine Vergussmasse angeordnet. Die Vergussmasse ist elektrisch isolierend und weist eine hohe Wärmeleitfähigkeit auf.

DE 10 2018 122 080 A1 offenbart ein Batteriemodul einer Traktionsbatterie eines Kraftfahrzeugs. Das Batteriemodul verfügt über einen Träger und eine Vielzahl von Batteriezellen, die mittels einer Vergussmasse an den Träger angebunden sind.

Es besteht Bedarf an einem Batteriemodul einer Traktionsbatterie eines Kraftfahrzeugs, die einfach herstellbar ist. Aufgabe der Erfindung ist es, ein Batteriemodul einer Traktionsbatterie eines Kraftfahrzeugs und Verfahren zum Herstellen eines solchen Batteriemodul einer Traktionsbatterie zu schaffen.

Diese Aufgabe wird durch ein Batteriemodul einer Traktionsbatterie eines Kraftfahrzeugs nach Anspruch 1. Das Batteriemodul weist mehrere in mindestens zwei übereinander positionierten Batteriezellenebenen angeordnete Batteriezellen auf. Das Batteriemodul weist ferner einer Vorrichtung zur Kühlung der Batteriezellen auf. Die Vorrichtung zur Kühlung der Batteriezellen weist folgende Baugruppen auf: Eine zwischen einer ersten Batteriezellenebene und einer zweiten Batteriezellenebene angeordneten erste Kühlplatte, die in thermischem Kontakt mit den Batteriezellen der ersten Batteriezellenebene und in thermischem Kontakt mit den Batteriezellen der zweiten Batteriezellenebene steht. Innerhalb der ersten Batteriezellenebene angeordnete zweite Kühlplatten und innerhalb der zweiten Batteriezellenebene angeordnete weitere zweite Kühlplatten, die in thermischem Kontakt mit mehreren Batteriezellen der jeweiligen Batteriezellenebene stehen. Die erste Kühlplatte und die zweiten Kühlplatten sind derart ausgebildet, dass ein erster Teil eines in die erste Kühlplatte einströmenden Kühlfluids die erste Kühlplatte durchströmt und aus der ersten Kühlplatte ausströmt, und dass ein zweiter Teil des in die erste Kühlplatte einströmenden Kühlfluids von der ersten Kühlplatte in die zweiten Kühlplatten strömt, die zweiten Kühlplatten durchströmt von den zweiten Kühlplatten in die erste Kühlplatte strömt und aus der der ersten Kühlplatte ausströmt. Eintrittsrohre der zweiten Kühlplatten, über welche der zweite Teil des Kühlfluids von der ersten Kühlplatte in die zweiten Kühlplatten strömt, und Austrittsrohre der zweiten Kühlplatten, über welche anschließend der zweite Teil des Kühlfluids von den zweiten Kühlplatten in die erste Kühlplatte strömt, sind mit Anschlussstutzen der ersten Kühlplatte für die Eintrittsrohre und Austrittsrohre über ein wärmeleitendes Vergussmaterial fluiddicht verbunden.

Das erfindungsgemäße Batteriemodul verfügt über die mehreren Batteriezellen sowie über die Vorrichtung zur Kühlung der Batteriezellen, wobei die Vorrichtung zur Kühlung der Batteriezellen die erste Kühlplatte und die mehreren zweiten Kühlplatten aufweist. Die Batteriezellen sind in zwei übereinander positionierten Batteriezellenebenen angeordnet, ebenso die zweiten Kühlplatten, wobei die erste Kühlplatte die beiden Batteriezellenebenen trennt.

Der zweite Teil des in die erste Kühlplatte eintretenden Kühlmediums strömt von der ersten Kühlplatte in die zweiten Kühlplatten, durchströmt die zweiten Kühlplatten und tritt danach wieder in die erste Kühlplatte ein. Hierzu sind Eintrittsrohre der zweiten Kühlplatten und Austrittsrohre der zweiten Kühlplatten mit entsprechenden Anschlussstutzen der ersten Kühlplatte fluiddicht verbunden, und zwar über ein wärmeleitendes Vergussmaterial.

Die zweiten Kühlplatten sind demnach nicht mit den ersten Kühlplatten verschweißt, um die fluiddichte Verbindung zwischen den zweiten Kühlplatten und den ersten Kühlplatten auszubilden, vielmehr erfolgt die Verbindung der zweiten Kühlplatten mit der ersten Kühlplatte über das wärmeleitende Vergussmaterial. Hierdurch lässt sich die Kühlvorrichtung des Batteriemoduls und damit letztendlich das Batteriemodul mit geringem Aufwand einfach herstellen.

Vorzugsweise ist an jeder Seite jeder zweiten Kühlplatte jeweils eine Reihe aus jeweils mehreren Batteriezellen angeordnet, die mit der jeweiligen zweiten Kühlplatte über wärmeleitendes Vergussmaterial verbunden sind. Auch dies dient der einfachen Herstellung des Batteriemoduls. Aus zweiten Kühlplatten und Batteriezellen, die mit den zweiten Kühlplatten über das wärmeleitende Vergussmaterial verbunden sind, können Vormontagebaugruppen ausgebildet werden, die dann mit der ersten Kühlplatte verbunden werden.

Vorzugsweise ist das wärmeleitende Vergussmaterial ein Polyurethan-Vergussmaterial. Vorzugsweise ist Polyurethan-Vergussmaterial ein 2-Komponenten-Klebstoff, der insbesondere bei einer Dauergebrauchstemperatur zumindest zwischen -40°C und +130°C thermisch stabil ist.

Die Verwendung eines 2-Komponenten-Klebstoffs vorzugsweise auf Polyurethanbasis als Vergussmaterial ist besonders bevorzugt. Ein solcher 2-Komponenten-Klebstoff ist zumindest bei einer Dauergebrauchstemperatur zwischen -40 °C und +130 °C, abhängig vom 2-Komponenten-Klebstoff auch bis zu +180 °C, thermisch stabil. So besteht keine Gefahr, dass sich die Verbindung zwischen den zweiten Kühlplatten und der ersten Kühlplatte sowie die Verbindung der Batteriezellen mit den zweiten Kühlplatten im Betrieb des Kraftfahrzeugs löst. Ferner ist die Verarbeitung eines solchen 2-Komponenten-Klebstoffs einfach, wodurch die Herstellung des Batteriemoduls vereinfacht wird.

Vorzugsweise weist die erste Kühlplatte einen Aufbau aus mehreren Teilplatten auf, wobei äußere Teilplatten Außenseiten der ersten Kühlplatte bilden und vorzugsweise zusammen mit einer vorzugsweise sandwichartig zwischen den äußeren Teilplatten angeordneten mittleren Teilplatte Strömungskanäle der ersten Kühlplatte für das Kühlmedium bilden.

Die erste Kühlplatte, vorzugsweise die äußeren Teilplatten derselben, weisen vorzugweise an den Außenseiten der ersten Kühlplatte einen umlaufenden Rand auf, welcher der Aufnahme des wärmeleitenden Vergussmaterials dient. Über die Außenseiten der ersten Kühlplatte steht dieselben mit den Batteriezellen in Kontakt. Der umlaufende Rand an den Außenseiten der ersten Kühlplatte stellt sicher, dass dann, wenn der 2-Komponenten-Klebstoff, der als Vergussmaterial dient, noch nicht ausgehärtet und demnach flüssig ist, auf der Außenseite der ersten Kühlplatte gehalten werden kann. So kann das Batteriemodul einfach hergestellt werden.

Das erfindungsgemäße Verfahren zum Herstellen eines Batteriemoduls einer Traktionsbatterie ist in Anspruch 11 definiert. Das Verfahren umfasst zumindest die folgenden Schritte: Bereitstellen der Batteriezellen. Bereitstellen der zweiten Kühlplatten. Ausbilden von Vormontagebaugruppen aus jeweils einer zweiten Kühlplatte und mehreren zu beiden Seiten der zweiten Kühlplatte angeordneten Batteriezellen. Bereitstellen der ersten Kühlplatte. Verbinden der Vormontagebaugruppen mit der ersten Kühlplatte, derart, dass die Eintrittsrohre der zweiten Kühlplatten und die Austrittsrohre der zweiten Kühlplatten mit Anschlussstutzen der ersten Kühlplatte für die Eintrittsrohre und Austrittsrohre der zweiten Kühlplatten über das wärmeleitende Vergussmaterial fluiddicht verbunden sind. Das erfindungsgemäße Verfahren erlaubt eine einfache Herstellung des erfindungsgemäßen Batteriemoduls.

Vorzugsweise werden beim Ausbilden der Vormontagebaugruppen mit jeder zweiten Kühlplatte die zu beiden Seiten der zweiten Kühlplatte angeordneten Batteriezellen mit der zweiten Kühlplatte über das wärmeleitenden Vergussmaterial verbunden. Hierzu wird auf beiden Seiten der jeweiligen zweiten Kühlplatte das wärmeleitende Vergussmaterial aufgetragen und dann werden die Batteriezellen mit der jeweiligen zweiten Kühlplatte unter Aushärten des Vergussmaterials verpresst. Dies erlaubt eine besonders einfache Herstellung der Vormontagebaugruppen des Batteriemoduls.

Vorzugsweise wird beim Verbinden der Vormontagebaugruppen mit der ersten Kühlplatte auf eine erste Außenseite der ersten Kühlplatte das wärmeleitende Vergussmaterial aufgetragen, wobei anschießend an dieser ersten Außenseite die jeweiligen Vormontagebaugruppen mit der ersten Kühlplatte verbunden werden. Anschließend wird auf eine gegenüberliegende zweite Außenseite der ersten Kühlplatte das wärmeleitende Vergussmaterial aufgetragen, wobei anschießend an dieser zweiten Außenseite die jeweiligen Vormontagebaugruppen mit der ersten Kühlplatte verbunden werden. Hierbei gelangt das Vergussmaterial in Ringspalte zwischen den Anschlussstutzen der ersten Kühlplatte und den Eintrittsrohren und Austrittsrohren der zweiten Kühlplatten und härtet anschließend aus. Dies erlaubt eine besonders einfache Herstellung des Batteriemoduls.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines Batteriemoduls einer Traktionsbatterie eines Kraftfahrzeugs,
- Fig. 2: eine perspektivische Ansicht einer Vorrichtung zur Kühlung der Batteriezellen des Batteriemoduls der Fig. 1,
- Fig. 3: eine perspektivische Ansicht einer Vormontagebaugruppe des Batteriemoduls der Fig. 1,
- Fig. 4: die Vormontagebaugruppe der Fig. 3 zusammen mit einem Montagewerkzeug,
- Fig. 5: die Vormontagebaugruppe der Fig. 3 zusammen mit einer ersten Kühlplatte der Vorrichtung der Fig. 2,
- Fig. 6: einen Querschnitt durch das Detail VI des Batteriemoduls der Fig. 1.

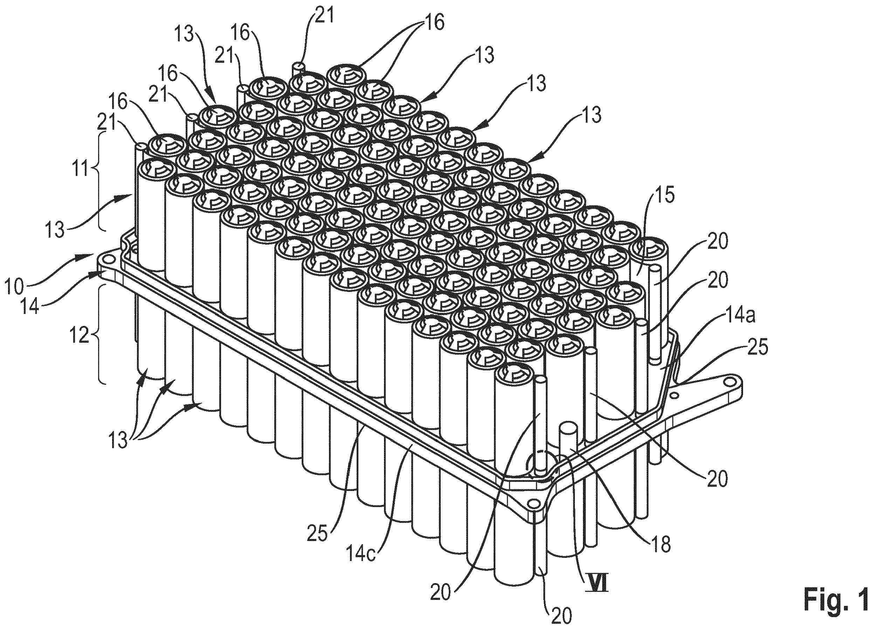

Fig. 1 zeigt eine perspektivische Ansicht eines bevorzugten Ausführungsbeispiels von Baugruppen eines erfindungsgemäßen Batteriemoduls, nämlich eine Vielzahl von Batteriezellen 13 sowie eine Vorrichtung 10 zur Kühlung der Batteriezellen 13. Die Anordnung der Fig. 1 kann in einem Modulgehäuse (nicht gezeigt) aufgenommen sein.

Die Batteriezellen 13 sind in zwei übereinander angeordneten Batteriezellenebenen 11, 12 angeordnet. So sind in einer ersten Batteriezellenebene 11 mehrere Batteriezellen 13 angeordnet, die im gezeigten Ausführungsbeispiel acht Reihen von Batteriezellen 13 bilden. In der unteren Batteriezellenebene 12 sind ebenfalls eine Vielzahl von Batteriezellen 13 angeordnet, die ebenfalls acht Reihen von Batteriezellen 13 ausbilden. In jeder Reihe aus Batteriezellen 13 sind jeweils vierzehn Batteriezellen 13 angeordnet. Es sei darauf hingewiesen, dass die Anzahl der Batteriezellen 13 je Reihe und die Anzahl der Reihen an Batteriezellen 13 je Batteriezellenebene 11, 12 rein exemplarischer Natur ist.

Die Vorrichtung 10 zur Kühlung der Batteriezellen 13 verfügt über eine zwischen der ersten Batteriezellenebene 11 und der zweiten Batteriezellenebene 12 angeordnete erste Kühlplatte 14, die über ihre Außenseiten im thermischen Kontakt mit den Batteriezellen 13 der ersten Batteriezellenebene 11 und im thermischen Kontakt mit den Batteriezellen 13 der zweiten Batteriezellenebene 12 steht. So steht in Fig. 1 die erste Kühlplatte 14 über eine erste Außenseite mit einer Unterseite der Batteriezellen 13 der ersten Batteriezellenebene 11 und über eine zweite Außenseite mit einer Oberseite der Batteriezellen 13 der zweiten Batteriezellenebene 12 in thermischem Kontakt.

In der ersten Batteriezellenebene 11 sind an der Oberseite der Batteriezellen 13 und in der zweiten Batteriezellenebene 12 an der Unterseite der Batteriezellen 13 elektrische Kontakte 16 der Batteriezellen 13 ausgebildet. Diejenigen Seiten der jeweiligen Batteriezelle 13, an welchen die elektrischen Kontakte 16 der Batteriezellen 13 ausgebildet sind, sind also von der ersten Kühlplatte 14 abgewandt. Die Batteriezellen 13 liegen demnach mit den von den elektrischen Kontakten 16 der Batteriezellen 13 abgewandten Seiten an der ersten Kühlplatte 14 an, und zwar an den Außenseiten der ersten Kühlplatte 14.

Die erste Kühlplatte 14 ist von einem Kühlfluid durchströmt. Die erste Kühlplatte 14 kann über einen sandwichartigen Aufbau aus vorzugsweise drei Teilplatten 14a, 14b und 14c verfügen. Es ist möglich, dass die erste Kühlplatte 14 auch von lediglich zwei Teilplatten gebildet ist. Auch kann die erste Kühlplatte 14 eine monolithische Baugruppe sein, die z.B. durch 3D Drucken hergestellt ist.

Dann, wenn die erste Kühlplatte 14 aus mehr als zwei Teilplatten gebildet ist, bilden die beiden äußeren Teilplatten 14a, 14b die Außenseiten der ersten Kühlplatte 14, über welche die erste Kühlplatte 14 mit den Batteriezellen 13 der beiden Batteriezellenebenen 11, 12 im thermischen Kontakt steht. Die mindestens eine mittlere Teilplatte 14b ist sandwichartig zwischen den Teilplatten 14a, 14c angeordnet und definiert zusammen mit den Teilplatten 14a, 14c Strömungskanäle 17 der ersten Kühlplatte 14 für das Kühlmedium.

Dann, wenn die erste Kühlplatte 14 aus zwei Teilplatten gebildet ist, bilden diese Teilplatten die Außenseiten der ersten Kühlplatte 14, über welche die erste Kühlplatte 14 mit den Batteriezellen 13 der beiden Batteriezellenebenen 11, 12 im thermischen Kontakt steht. Diese beiden Teilplatten definieren dann die Strömungskanäle 17 der ersten Kühlplatte 14 für das Kühlmedium.

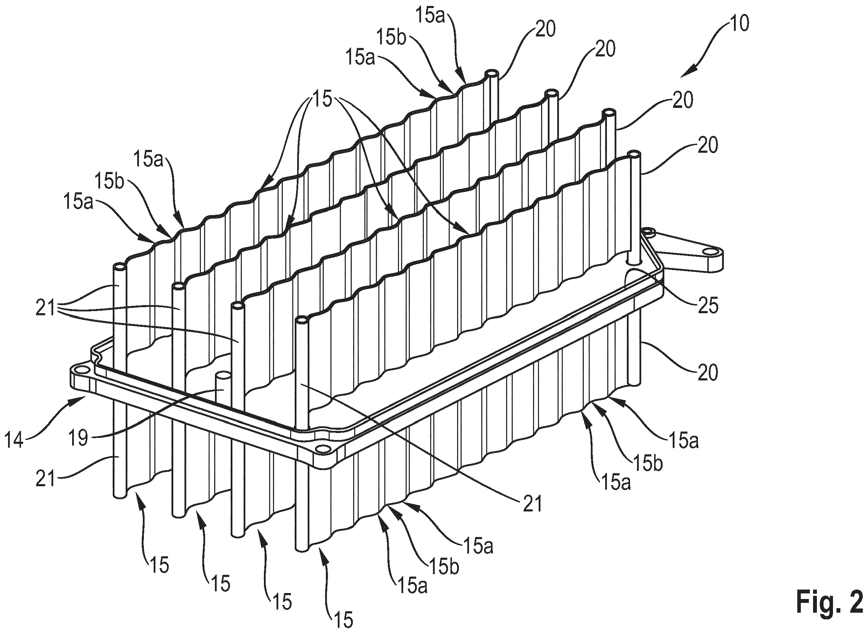

Die Vorrichtung 10 zur Kühlung der Batteriezellen verfügt zusätzlich zu der ersten Kühlplatte 14 über mehrere zweite Kühlplatten 15. So sind, wie am besten Fig. 2 entnommen werden kann, welche die Vorrichtung 10 zur Kühlung der Batteriezellen 13 ohne die Batteriezellen 13 zeigt, in jeder Batteriezellenebene 11, 12 mehrere, im gezeigten Ausführungsbeispiel vier, zweite Kühlplatten 15 angeordnet.

Die zweiten Kühlplatten 15 sind ebenso wie die erste Kühlplatte 14 von dem Kühlfluid durchströmt, wobei jede der zweiten Kühlplatten 15 im thermischen Kontakt mit mehreren Batteriezellen der jeweiligen Batteriezellenebene 11, 12 steht, und zwar derart, dass jede der zweiten Kühlplatten 15 auf jeder Seite derselben mit jeweils einer Reihe aus Batteriezellen 13 im thermischen Kontakt steht.

Die Vorrichtung 10 verfügt ferner über einen Kühlfluideinlass 19 bzw. Kühlfluidzulauf und einen Kühlfluidauslass 18 bzw. Kühlfluidablauf.

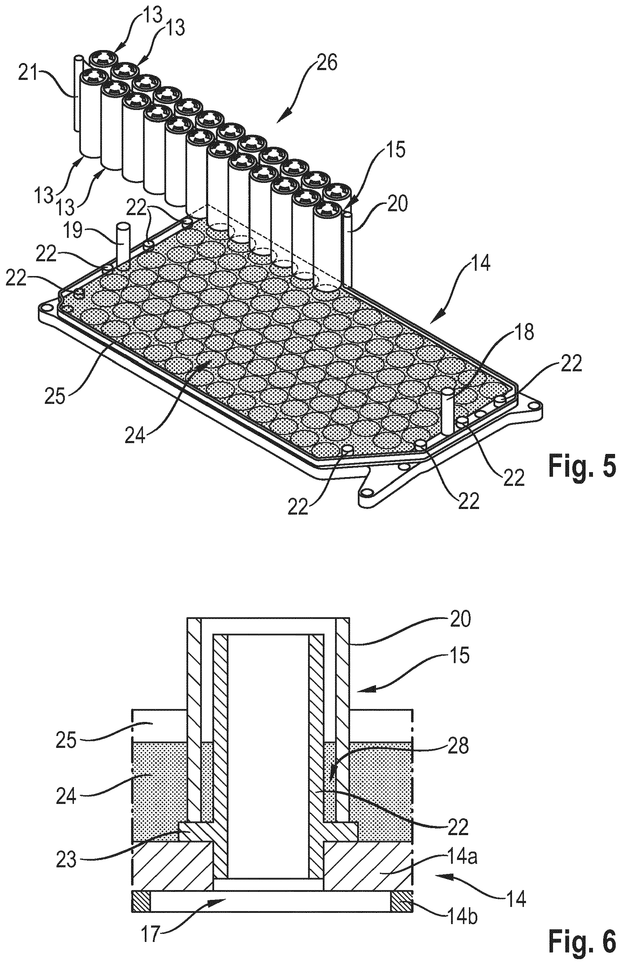

In Fig. 2 ist lediglich der Kühlfluideinlass 19 und in Fig. 1 lediglich der Kühlfluidauslass 18 sichtbar. In Fig. 5 sind sowohl der Kühlfluideinlass 19 als auch der Kühlfluidauslass 18 sichtbar. Kühlfluideinlass 19 und Kühlfluidauslass 18 sind an unterschiedlichen Enden bzw. Seiten der ersten Kühlplatte 14 ausgebildet.

Über den Kühlfluideinlass 19 strömt Kühlfluid in die erste Kühlplatte 14, nämlich die Strömungskanäle 17 der ersten Kühlplatte 14 ein. Ein erster Teil dieses über den Kühlfluideinlass 19 in die erste Kühlplatte 14 einströmenden Kühlfluids strömt ausschließlich durch die erste Kühlplatte 14 hindurch in Richtung auf die gegenüberliegende zweite Seite der ersten Kühlplatte 14, um an dieser gegenüberliegenden zweiten Seite der ersten Kühlplatte 14 über den Kühlfluidauslass 18 aus der ersten Kühlplatte 14 herauszuströmen.

Ein zweiter Teil des über den Kühlfluideinlass 19 in die erste Kühlplatte 14 einströmenden Kühlfluids strömt an der ersten Seite der ersten Kühlplatte 14 von der ersten Kühlplatte 14 in die zweiten Kühlplatten 15, durchströmt die zweiten Kühlplatten 15 und strömt an der zweiten, gegenüberliegenden Seite der ersten Kühlplatte 14 von den zweiten Kühlplatten 15 zurück in die erste Kühlplatte 14, um dann wiederum an der zweiten Seite der ersten Kühlplatte 14 über den Kühlfluidauslass 18 aus der ersten Kühlplatte 14 und damit aus der Vorrichtung 10 zur Kühlung der Batteriezellen 13 herauszuströmen.

Die zweiten Kühlplatten 15 verfügen in Längsrichtung, also zwischen der ersten Seite der ersten Kühlplatte 14 und der gegenüberliegenden zweiten Seite der ersten Kühlplatte 14 über einen gewellten Verlauf bzw. einen Wellenkontur mit Erhebungen 15a und Vertiefungen 15b. Diese Kontur aus sich abwechselnden Erhebungen 15a und Vertiefungen 15b ist an beiden Seiten der zweiten Kühlplatten 15 ausgebildet.

An den sich gegenüberliegenden Enden der zweiten Kühlplatten 15 verfügen dieselben über Rohre, nämlich an der ersten Seite der ersten Kühlplatte 14 über Eintrittsrohre 21 und an der gegenüberliegenden zweiten Seite der ersten Kühlplatte 14 über Austrittsrohre 20.

Über die Eintrittsrohre 21 kann der zweite Teil des in die erste Kühlplatte 14 einströmenden Kühlfluids von der ersten Kühlplatte 14 in die zweiten Kühlplatten 15 überströmen. Über die Austrittsrohre 20 kann dieser zweite Teil des Kühlfluids nach dem Durchströmen der zweiten Kühlplatten 15 aus denselben austreten und zurück in die erste Kühlplatte 14 strömen, um im Anschluss über den Kühlfluidauslass 18 abgeführt zu werden.

Fig. 6 zeigt das Detail VI der Fig. 1 im Bereich eines Austrittsrohrs 20 einer zweiten Kühlplatte 15. Gemäß Fig. 6 ist dieses Austrittsrohr 20 der gezeigten zweiten Kühlplatte 15 mit einem Anschlussstutzen 22 der ersten Kühlplatte 14 fluiddicht verbunden, wobei gemäß Fig. 6 ein der ersten Kühlplatte 14 zugewandtes Ende des Austrittsrohrs 20 auf einem in Umfangsrichtung umlaufenden Vorsprung 23 des Anschlussstutzens 22 anliegt. Das Detail VI der Fig. 6 trifft auch auf die gegenüberliegenden Eintrittsrohre 21 der zweiten Kühlplatten 15 zu. Der jeweilige Anschlussstutzen 22 ist strömungsseitig mit den Strömungskanäle 17 der ersten Kühlplatte 14 gekoppelt.

Die Eintrittsrohre 21 der zweiten Kühlplatten 15 sind mit den Anschlussstutzen 22 der ersten Kühlplatte 14 für die Eintrittsrohre 21 und die Austrittsrohre 20 der zweiten Kühlplatten 15 sind mit den Anschlussstutzen 22 der ersten Kühlplatte 14 für die Austrittsrohre 20 über ein wärmeleitendes Vergussmaterial 24 fluiddicht verbunden.

Gemäß Fig. 6 ist dieses wärmeleitende Vergussmaterial 24 auch in einem Ringspalt 28 zwischen dem jeweiligen Anschlussstutzen 22 und dem Eintrittsrohr 21 bzw. zwischen dem jeweiligen Anschlussstutzen 22 und dem Austrittsrohr 20 angeordnet.

Die zweiten Kühlplatten 15 sind demnach im Bereich ihrer Eintrittsrohre 21 und Austrittsrohre 20 mit den Anschlussstutzen 22 der ersten Kühlplatte 14 nicht verschweißt, sondern über das wärmeleitende Vergussmaterial 24 fluiddicht verbunden.

Die an jeder Seite jeder zweiten Kühlplatte 15 in Reihen angeordneten Batteriezellen sind mit der jeweiligen zweiten Kühlplatte 15 ebenfalls über ein wärmeleitende Vergussmaterial verbunden. Dieses Vergussmaterial entspricht vorzugsweise dem Vergussmaterial 24, welches der fluiddichten Verbindung der Eintrittsrohre 21 und der Austrittsrohre 20 der zweiten Kühlplatten 15 mit den Anschlussstutzen 22 der ersten Kühlplatte 14 dient. So ist an jeder Seite jeder zweiten Kühlplatte 15 jeweils eine Reihe aus jeweils mehreren Batteriezellen 13 angeordnet, die mit der jeweiligen zweiten Kühlplatte 15 über das wärmeleitende Vergussmaterial verbunden sind.

Bei dem wärmeleitenden Vergussmaterial handelt es sich insbesondere um ein Vergussmaterial auf Polyurethanbasis, insbesondere um einen 2-Komponenten-Klebstoff auf Polyurethanbasis. Dieser ist insbesondere bei einer Dauergebrauchstemperatur zwischen mindestens -40 °C und +130 °C thermisch stabil.

Ferner ist das wärmeleitende Vergussmaterial, vorzugsweise der 2-Komponenten-Klebstoff auf Polyurethanbasis, resistent bzw. stabil gegenüber dem Kühlmedium derart, dass das Kühlmedium die Eigenschaften des Vergussmaterials nicht beeinträchtigt.

Als 2-Komponenten-Klebstoff auf Polyurethanbasis kann insbesondere ein 2-Komponenten-Klebstoff genutzt werden, der unter dem Markennamen "WEVOPUR" erhältlich ist.

Wie oben bereits ausgeführt, verfügen die zweiten Kühlplatten 15 zwischen ihren Eintrittsrohren 21 und Austrittsrohren 20 über eine gewellte Kontur mit den Erhebungen 15a und den zwischen den Erhebungen 15a ausgebildeten Vertiefungen 15b. In jeder Vertiefung 15b ist eine Batteriezelle 13 angeordnet, die abschnittsweise in die jeweilige Vertiefung 15b hineinragt. Dabei sind die Vertiefungen 15b auf einer ersten Seite der jeweiligen zweiten Kühlplatte 15 und damit die in den Vertiefungen 15b an der ersten Seite angeordneten Batteriezellen 13, die eine Reihe aus Batteriezellen 13 bilden, gegenüber den Vertiefungen 15b auf der gegenüberliegenden zweiten Seite der jeweiligen zweiten Kühlplatte 15 und damit gegenüber den in den Vertiefungen 15b an der zweiten Seite angeordneten Batteriezellen 13, die eine weitere Reihe aus Batteriezellen 13 bilden, versetzt, vorzugsweise derart, dass jede an der zweiten Seite der jeweiligen zweiten Kühlplatte 15 angeordnete Batteriezelle 13 in der Mitte zwischen zwei an der ersten Seite der jeweiligen zweiten Kühlplatte 15 angeordneten Batteriezellen 13 positioniert ist.

Wie ebenfalls oben bereits ausgeführt, sind die zweiten Kühlplatten 15 über ihre Eintrittsrohre 21 und Austrittsrohre 20 mit den Anschlussstutzen 22 der ersten Kühlplatte 14 fluiddicht verbunden, nämlich über das wärmeleitende Vergussmaterial 24. Fig. 6 kann dabei entnommen werden, dass die Anschlussstutzen 22 mit den Strömungskanälen 17 der ersten Kühlplatte 14 strömungsseitig gekoppelt sind, um ein Überströmen des Kühlfluids zwischen der ersten Kühlplatte 14 und der jeweiligen zweiten Kühlplatte 15 im Bereich der Eintrittsrohre 21 und Austrittsrohre 20 der zweiten Kühlplatten 15 zu ermöglichen.

Die erste Kühlplatte 14, vorzugsweise äußere Teilplatten 14a, 14c derselben, verfügt über einen umlaufenden Rand 25, welcher der Aufnahme des wärmeleitenden Vergussmaterials 24 dient, und zwar insbesondere im noch nicht ausgehärteten, flüssigen Zustand des Vergussmaterials 24 während der Herstellung des Batteriemoduls.

Die in Fig. 1 gezeigte Anordnung aus den Batteriezellen 13 und der Vorrichtung 10 zur Kühlung der Batteriezellen 13 und damit das Batteriemodul lässt sich einfach herstellen. Hierbei kommt vorzugsweise das nachfolgend beschriebene Verfahren zum Einsatz.

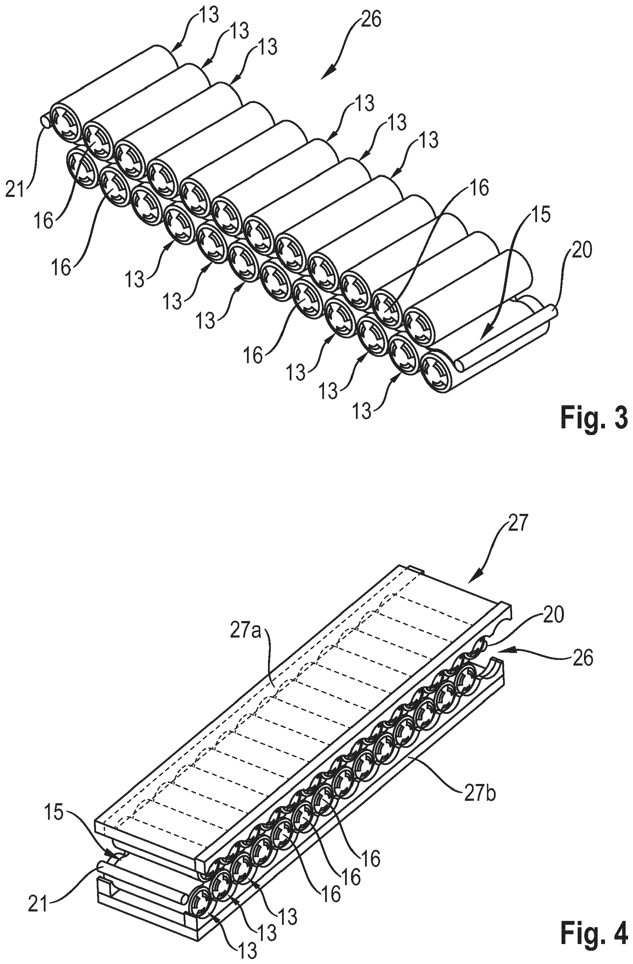

Zunächst werden Batteriezellen 13 und zweite Kühlplatten 15 bereitgestellt. Aus den zweiten Kühlplatten 15 und den Batteriezellen 13 werden Vormontagebaugruppen 26 ausgebildet, wobei Fig. 3 eine derartige Vormontagebaugruppe 26 aus einer zweiten Kühlplatte 15 und mehreren Batteriezellen 13 zeigt.

Beim Ausbilden der Vormontagebaugruppen 26 wird so vorgegangen, dass mit jeder zweiten Kühlplatte 15 die zu beiden Seiten der zweiten Kühlplatte 15 angeordneten Batteriezellen 13 mit der zweiten Kühlplatte 15 über das wärmeleitende Vergussmaterial 24 verbunden werden.

Hierzu wird auf beiden Seiten der jeweiligen zweiten Kühlplatte 15, zumindest im Bereich der Vertiefungen 15b derselben, das wärmeleitende Vergussmaterial 24 aufgetragen, wobei dann die Batteriezellen 13 mit der jeweiligen zweiten Kühlplatte 15 verbunden werden, und zwar dadurch, dass die Batteriezellen 13 in die Vertiefungen 15b an den beiden Seiten der zweiten Kühlplatte 15 eingesetzt werden und verpresst werden, und zwar unter Aushärten des wärmeleitenden Vergussmaterials 24.

Dies erfolgt vorzugsweise in dem in Fig. 4 gezeigten Montagewerkzeug 27, welches die beiden Werkzeughälften 27a und 27b aufweist. Zwischen den beiden Werkzeughälften 27a und 27b des Montagewerkzeugs 27 wird eine Anordnung aus einer zweiten Kühlplatte 15 und zwei Reihen aus mehreren Batteriezellen 13 angeordnet, wobei, wie bereits ausgeführt, zu jeder Seite der jeweiligen zweiten Kühlplatte 15 eine Reihe aus mehreren Batteriezellen 13 angeordnet ist. Über die Werkzeughälften 27a und 27b wird die Anordnung aus der zweiten Kühlplatte 15 und den beiden Reihen aus Batteriezellen 13 unter Aushärten des Vergussmaterials 24 verpresst, um so die Vormontagebaugruppen 26 auszubilden.

Nach dem Ausbilden der Vormontagebaugruppen 26, also nach dem Verbinden von Batteriezellen 13 mit den zweiten Kühlplatten 15, werden die zweiten Kühlplatten 15 mit der ersten Kühlplatte 14 des jeweiligen Batteriemoduls verbunden, und zwar derart, dass die Eintrittsrohre 21 und die Austrittsrohre 20 der zweiten Kühlplatten 15 der Vormontagebaugruppen 26 mit den Anschlussstutzen 22 der ersten Kühlplatte 14 über das wärmeleitende Vergussmaterial 24 fluiddicht verbunden werden.

Hierzu wird zunächst das Vergussmaterial 24 an einer ersten, nach oben weisenden oder nach oben ausgerichteten Außenseite der ersten Kühlplatte 14 auf die jeweilige Außenseite der jeweiligen äußeren Teilplatte 14a, 14c aufgetragen, wobei hierbei das noch flüssige Vergussmaterial über den Rand 25 auf der jeweiligen Außenseite der ersten Kühlplatte 14 derart gehalten wird, dass dasselbe nicht von der jeweiligen Außenseite herunterfließen kann.

Anschließend werden an dieser ersten Außenseite die jeweiligen Vormontagebaugruppen 26 mit der ersten Kühlplatte 14 verbunden, und zwar wie oben ausgeführt, unter Bereitstellung der fluiddichten Verbindung der Eintrittsrohre 21 und der Austrittsrohre 20 der zweiten Kühlplatten 15 der Vormontagebaugruppen 16 mit der ersten Kühlplatte 14.

Hierbei erfolgt auch eine Verbindung der Batteriezellen 13 der jeweiligen Vormontagebaugruppe 26 mit der ersten Kühlplatte 14 an den der ersten Kühlplatte 14 zugewandten Enden der Batteriezellen 13.

Anschließend wird die bis dahin herstellte Anordnung gedreht und auf die gegenüberliegende zweite, nunmehr nach oben weisende oder nach oben ausgerichtete Außenseite der ersten Kühlplatte 14 bzw. die gegenüberliegende äußere Teilplatte 14c, 14a der ersten Kühlplatte 14 wiederum das wärmeleitende Vergussmaterial 24 aufgetragen und anschließend werden an dieser zweiten Außenseite die jeweiligen Vormontagebaugruppen 26 mit der ersten Kühlplatte 14 verbunden.

Wie oben ausgeführt, gelangt hierbei das Vergussmaterial 24 in die Ringspalte 28 zwischen den Anschlussstutzen 22 der ersten Kühlplatte 14 und den Eintrittsrohren 21 sowie Austrittsrohren 20 der Vormontagbaugruppen 26 und damit der zweiten Kühlplatten 15 der Vormontagebaugruppen 26, wobei dieses Vergussmaterial 24 anschließend aushärtet und so die fluiddichte Verbindung zwischen den Eintrittsrohren 21 und Austrittsrohren 20 der zweiten Kühlplatten 15 und den Anschlussstutzen 22 der ersten Kühlplatte 14 bereitstellt.

## Patentansprüche

1. Batteriemodul einer Traktionsbatterie eines Kraftfahrzeugs,
mit mehreren in mindestens zwei übereinander positionierten Batteriezellenebenen (11, 12) angeordneten Batteriezellen (13),
mit einer Vorrichtung (10) zur Kühlung der Batteriezellen (13), wobei die Vorrichtung zur Kühlung der Batteriezellen (13) folgende Baugruppen aufweist:
eine zwischen einer ersten Batteriezellenebene (11) und einer zweiten Batteriezellenebene (12) angeordnete erste Kühlplatte (14), die in thermischem Kontakt mit den Batteriezellen (13) der ersten Batteriezellenebene (11) und in thermischem Kontakt mit den Batteriezellen (13) der zweiten Batteriezellenebene (12) steht,
innerhalb der ersten Batteriezellenebene (11) angeordnete zweite Kühlplatten (15) und innerhalb der zweiten Batteriezellenebene (12) angeordnete weitere zweite Kühlplatten (15), die in thermischem Kontakt mit mehreren Batteriezellen (13) der jeweiligen Batteriezellenebene (11, 12) stehen,
wobei die erste Kühlplatte (14) und die zweiten Kühlplatten (15) derart ausgebildet sind, dass ein erster Teil eines in die erste Kühlplatte (14) einströmenden Kühlfluids die erste Kühlplatte (14) durchströmt und aus der ersten Kühlplatte ausströmt, und dass ein zweiter Teil des in die erste Kühlplatte (14) einströmenden Kühlfluids von der ersten Kühlplatte (14) in die zweiten Kühlplatten (15) strömt, die zweiten Kühlplatten (15) durchströmt von den zweiten Kühlplatten (15) in die erste Kühlplatte (14) strömt und aus der der ersten Kühlplatte ausströmt,
wobei Eintrittsrohre (21) der zweiten Kühlplatten (15), über welche der zweite Teil des Kühlfluids von der ersten Kühlplatte (14) in die zweiten Kühlplatten (15) strömt, und Austrittsrohre (20) der zweiten Kühlplatten (15), über welche anschließend der zweite Teil des Kühlfluids von den zweiten Kühlplatten (15) in die erste Kühlplatte (14) strömt, mit Anschlussstutzen (22) der ersten Kühlplatte (14) für die Eintrittsrohre (21) und Austrittsrohre (20) über ein wärmeleitendes Vergussmaterial (24) fluiddicht verbunden sind.

2. Batteriemodul nach Anspruch 1, **dadurch gekennzeichnet, dass** an jeder Seite jeder zweiten Kühlplatte (15) jeweils eine Reihe aus jeweils mehreren Batteriezellen (13) angeordnet ist, die mit der jeweiligen zweiten Kühlplatte (15) über ein wärmeleitendes Vergussmaterial (24) verbunden sind.

3. Batteriemodul nach Anspruch1 oder 2, **dadurch gekennzeichnet, dass** das wärmeleitende Vergussmaterial (24) ein Polyurethan-Vergussmaterial ist.

4. Batteriemodul nach einem der Ansprüche 1 bis 3, **dadurch gekennzeichnet, dass** das wärmeleitende Vergussmaterial (24) ein 2-Komponenten-Klebstoff ist, der insbesondere bei einer Dauergebrauchstemperatur zumindest zwischen -40°C und +130°C thermisch stabil ist.

5. Batteriemodul nach einem der Ansprüche 1 bis 4, **dadurch gekennzeichnet, dass** die erste Kühlplatte (14) über einen Aufbau aus mehreren Teilplatten (14a, 14b, 14c) verfügt, wobei äußere Teilplatten (14a, 14c) Außenseiten der ersten Kühlplatte (14) bilden und vorzugsweise zusammen mit einer vorzugsweise sandwichartig zwischen den äußeren Teilplatten (14a, 14c) angeordneten mittleren Teilplatte (14b) Strömungskanäle (27) der ersten Kühlplatte (14) für das Kühlmedium bilden.

6. Batteriemodul nach Anspruch 5, **dadurch gekennzeichnet, dass** die Strömungskanäle (27) der ersten Kühlplatte (14) für das Kühlmedium mit den Anschlussstutzen (22) der ersten Kühlplatte (14) für die Eintrittsrohre (21) und Austrittsrohre (20) strömungsseitig gekoppelt sind.

7. Batteriemodul nach einem der Ansprüche 1 bis 6, **dadurch gekennzeichnet, dass** die erste Kühlplatte (14) an Außenseiten einen umlaufenden Rand (25) aufweist, welcher der Aufnahme des wärmeleitenden Vergussmaterials (24) dient.

8. Batteriemodul nach Anspruch 7, **dadurch gekennzeichnet, dass** die äußeren Teilplatten (14a, 14c) an den Außenseiten der ersten Kühlplatte (14) den umlaufenden Rand (25) aufweisen.

9. Batteriemodul nach einem der Ansprüche 1 bis 8, **dadurch gekennzeichnet, dass** die zweiten Kühlplatten (15) zwischen den Eintrittsrohren (21) und Austrittsrohren (20) eine Wellenkontur mit Erhebungen (15a) und Vertiefungen (15b) aufweisen, wobei in den Vertiefungen (15b) die Batteriezellen (13) angeordnet sind.

10. Batteriemodul nach Anspruch 9, **dadurch gekennzeichnet, dass** die Vertiefungen (15b) auf einer ersten Seite einer jeweiligen zweiten Kühlplatte (15) und damit die in den Vertiefungen (15b) an der ersten Seite angeordneten Batteriezellen (13), die eine Reihe aus Batteriezellen bilden, gegenüber den Vertiefungen (15b) auf einer zweiten Seite der jeweiligen zweiten Kühlplatte (15) und damit gegenüber den in den Vertiefungen (15b) an der zweiten Seite angeordneten Batteriezellen (13), die eine weitere Reihe aus Batteriezellen bilden, derart versetzt sind, dass jede an der zweiten Seite der jeweiligen zweiten Kühlplatte (15) angeordnete Batteriezelle (13) in der Mitte zwischen zwei an der ersten Seite der jeweiligen zweiten Kühlplatte (15) angeordneten Batteriezellen (15) positioniert ist.

11. Verfahren zum Herstellen eines Batteriemoduls einer Traktionsbatterie nach einem der Ansprüche 1 bis 10, mit folgenden Schritten:
Bereitstellen der Batteriezellen (13),
Bereitstellen der zweiten Kühlplatten (15),
Ausbilden von Vormontagebaugruppen (26) aus jeweils einer zweiten Kühlplatte (15) und mehreren zu beiden Seiten der zweiten Kühlplatte (15) angeordneten Batteriezellen (13),
Bereitstellen der ersten Kühlplatte (14),
Verbinden der Vormontagebaugruppen (26) mit der ersten Kühlplatte (14), derart, dass die Eintrittsrohre (21) der zweiten Kühlplatten (15) und die Austrittsrohre (20) der zweiten Kühlplatten (15) mit den Anschlussstutzen (22) der ersten Kühlplatte (14) für die Eintrittsrohre (21) und Austrittsrohre (20) der zweiten Kühlplatten (15) über das wärmeleitende Vergussmaterial (24) fluiddicht verbunden sind.

12. Verfahren nach Anspruch 11, **dadurch gekennzeichnet, dass** beim Ausbilden der Vormontagebaugruppen (26) mit jeder zweiten Kühlplatte (15) die zu beiden Seiten der zweiten Kühlplatte (15) angeordneten Batteriezellen (13) mit der zweiten Kühlplatte (13) über das wärmeleitende Vergussmaterial (24) verbunden werden.

13. Verfahren nach Anspruch 12, **dadurch gekennzeichnet, dass** hierzu auf beiden Seiten der jeweiligen zweiten Kühlplatte (15) das wärmeleitende Vergussmaterial (24) aufgetragen wird und dann die Batteriezellen (13) mit der jeweiligen zweiten Kühlplatte (15) unter Aushärten des Vergussmaterials (24) verpresst werden.

14. Verfahren nach einem der Ansprüche 11 bis 13, **dadurch gekennzeichnet, dass** beim Verbinden der Vormontagebaugruppen (26) mit der ersten Kühlplatte (14) auf eine erste Außenseite der ersten Kühlplatte (14) das wärmeleitende Vergussmaterial aufgetragen wird, und dass anschießend an dieser ersten Außenseite die jeweiligen Vormontagebaugruppen (26) mit der ersten Kühlplatte (14) verbunden werden.

15. Verfahren nach Anspruch 14, **dadurch gekennzeichnet, dass** anschließend auf eine gegenüberliegende zweite Außenseite der ersten Kühlplatte (14) das wärmeleitende Vergussmaterial aufgetragen wird, und dass anschießend an dieser zweiten Außenseite die jeweiligen Vormontagebaugruppen (26) mit der ersten Kühlplatte (14) verbunden werden.

16. Verfahren nach Anspruch 14 oder 15, **dadurch gekennzeichnet, dass** hierbei das Vergussmaterial in Ringspalte (28) zwischen den Anschlussstutzen (22) der ersten Kühlplatte (14) und den Eintrittsrohren (21) und Austrittsrohren (20) der zweiten Kühlplatten (15) gelangt und anschließend aushärtet.
